**Europäisches Patentamt**

**European Patent Office**

**Office européen des brevets**

(11) Veröffentlichungsnummer: **0 292 836 B1**

## (12) EUROPÄISCHE PATENTSCHRIFT

(45) Veröffentlichungstag der Patentschrift:
29.05.91 Patentblatt 91/22

(21) Anmeldenummer: 88107861.2

(22) Anmeldetag: 17.05.88

(51) Int. Cl.⁵: **F16L 11/00**

---

(54) **Zylindrischer Hohlkörper aus schraubenlinienförmig aufgewickeltem Kunststoffprofil.**

---

(30) Priorität: 23.05.87 DE 3717418

(43) Veröffentlichungstag der Anmeldung:
30.11.88 Patentblatt 88/48

(45) Bekanntmachung des Hinweises auf die
Patenterteilung:
29.05.91 Patentblatt 91/22

(84) Benannte Vertragsstaaten:
AT BE CH DE ES FR GB GR IT LI LU NL SE

(56) Entgegenhaltungen:
EP-A- 0 023 242
DE-B- 1 262 701
US-A- 3 495 628
US-A- 4 167 645

(73) Patentinhaber: **VOBAU ARTUR BASTON
GESELLSCHAFT FÜR VORRICHTUNGSBAU
MIT BESCHRÄNKTER HAFTUNG
In den Mühlwiesen
W-6653 Blieskastel-Breitfurt (DE)**

(72) Erfinder: **Baston, Artur
Theodor-Storm-Strasse 14
W-6650 Homburg-Einöd (DE)**
Erfinder: **Baston, Karl-Heinz, Dipl.-Ing.
Johann-Strauss-Strasse 2
W-6662 Contwig (DE)**

(74) Vertreter: **Patentanwälte Dipl.-Ing. F.W. Möll
Dipl.-Ing. H.Ch. Bitterich
Langstrasse 5 Postfach 2080
W-6740 Landau/Pfalz (DE)**

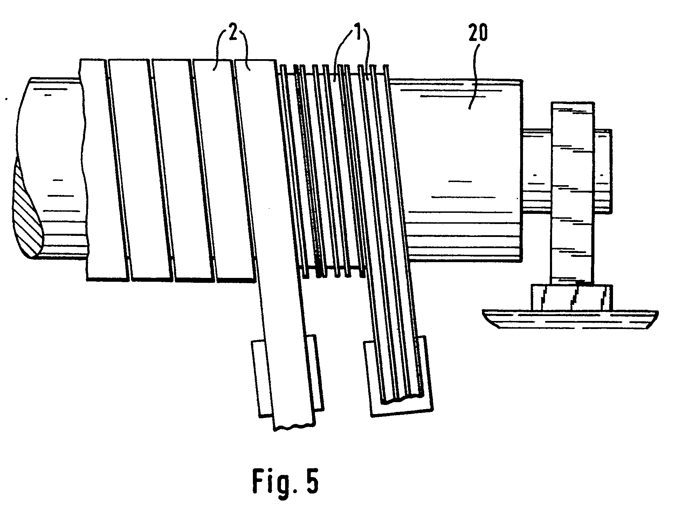

einen (in der Fig. 5 dargestellten) Dorn schraubenlinienförmig aufgewickelt. Auf das Unterprofil 1 wird anschließend ein Oberprofil 2 aufgesteckt. Der fertige Hohlkörper ist extrem preiswert und leicht sowie sehr formstabil.

Unterprofil 1 und Oberprofil 2 sind in diesem Ausführungsbeispiel identisch. Sie besitzen einen etwa E-förmigen Querschnitt mit zwei Außenschenkeln 3,4 und zwei Mittelschenkeln 5,6. Der gegenseitige Abstand der beiden Mittelschenkel 5,6 entspricht der Dicke der beiden Außenschenkel 3,4. Beim Aufstecken des Oberprofils 2 auf das Unterprofil 1 ist dieses um eine halbe Profilbreite seitlich versetzt. Dadurch kommen die nebeneinanderliegenden Außenschenkel 3,4 jeweils zwischen die beiden Mittelschenkel 5,6.

In das auf den Dorn aufgewickelte Unterprofil 1 kann vor dem Aufsetzen des Oberprofils 2 eine Verstärkungseinlage 12, beispielsweise in Form eines Glas- oder Kunststoffaserbandes oder eines Stahlbandes, eingelegt werden. Dadurch wird die Festigkeit der Wandung des fertigen Hohlkörpers erheblich erhöht, ohne daß für die Profile 1, 2 teure Werkstoffe, beispielsweise faserverstärkte Kunststoffe, verwendet werden müssen.

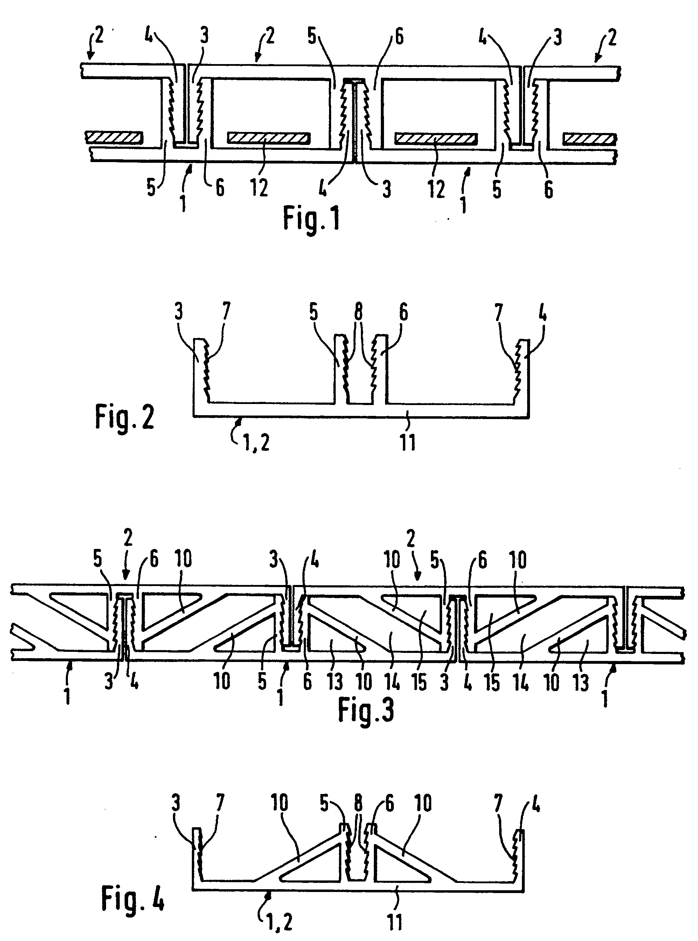

Fig. 2 zeigt in vergrößerter Darstellung einen Querschnitt durch ein Kunststoffprofil für Unter- und Oberprofil 1,2.

Die einander zugewandten Flächen der Außenschenkel 3,4 bzw. der Mittelschenkel 5,6 sind mit Hinterschneidungen 7,8 in Form eines Sägezahns versehen, so daß sich beim Zusammenstecken von Unter- und Oberprofil 1, 2 eine unlösbare formschlüssige Verbindung ergibt, deren Festigkeit und Dichtigkeit meistens völlig ausreicht, bei Bedarf jedoch durch eine Schweiß- oder Klebeverbindung verbessert werden kann.

Es empfiehlt sich, den Außenquerschnitt der Kunststoffprofile 1, 2 möglichst glatt und scharfkantig zu machen, damit der fertige Hohlkörper die gewünschte glatte Innen- und Außenfläche erhält, die das dichte Anbringen von Verbindungsmuffen und dergleichen erleichtert. Nicht erforderlich ist allerdings, daß das E-Profil rechtwinklig ist; vielmehr können auch schrägwinklige Profile eingesetzt werden.

Die Fig. 3 und 4 zeigen analog zur Darstellung der Fig. 1 und 2 einen Querschnitt durch eine Wand eines anderes Hohlkörpers bzw. durch ein abgewandeltes Kunststoffprofil. Zur Erhöhung der Stabilität der Mittelschenkel 5, 6 sind diagonal gerichtete Stützschenkel 10 vorgesehen. Dadurch entstehen außerdem in der Hohlkörperwand zusätzliche Kammern bzw. Kanäle 13, 14, 15. Durch diese können beispielsweise unterschiedliche Flüssigkeiten geführt werden, um einen Wärmeaustausch zu realisieren.

Fig. 5 schließlich zeigt in schematischer Darstellung die Herstellung eines Hohlkörpers unter Verwendung von Unter- und Oberprofilen 1, 2. Zunächst wird das Unterprofil schraubenlinienförmig auf einen Wickelkern 20 aufgewickelt, wobei die einzelnen Lagen eng aneinander liegen. Auf das Unterprofil 1 wird anschließend um eine halbe Profilbreite versetzt das Oberprofil 2 aufgesteckt bzw. aufgerastet und bei Bedarf zusätzlich verklebt oder verschweißt.

Die Flexibilität bei der Herstellung von Hohlkörpern ist bei Verwendung der erfindungsgemäßen Profile erheblich größer als beim Stand der Technik. So lassen sich beispielsweise die offenen E-Profile mit erheblich kleinerem Durchmesser wickeln als die geschlossenen Hohlprofile des Standes der Technik. Außerdem können Unterprofil 1 und Oberprofil 2 aus unterschiedlichen Materialien hergestellt werden. Beispielsweise kann eines der Profile aus transparentem, chemikalienbeständigem oder witterungsbeständigem Material, das andere Profil beispielsweise aus einem preiswerten Material bestehen.

Auf jeden Fall ist es möglich, die offenen E-Profile als Coil vom Herstellerwerk zur Baustelle zu bringen und erst dort zum fertigen Behälter zu verarbeiten. Dies erlaubt die Herstellung von leichten, preiswerten und doch stabilen Hohlkörpern, beispielsweise Behältern, unter Verwendung eines einzigen, preiswert extrudierbaren und transportierbaren Kunststoffprofils.

**Ansprüche**

1. Zylindrischer Hohlkörper, z.B. Rohr oder Behälter, der aus einem um einen Dorn (20) schraubenlinienförmig aufgewickelten, extrudierten, hohlen Kunststoffprofil (1, 2) besteht, dessen aneinanderliegende Seitenwandungen (3, 4 ; 5, 6) miteinander verbunden sind, dadurch gekennzeichnet, daß ein Unterprofil (1) und ein Oberprofil (2) vorgesehen ist und daß Unter- und Oberprofil (1, 2) jeweils einen E-Querschnitt mit zwei Außenschenkeln (3, 4) und zwei Mittelschenkeln (5, 6) besitzen und ineinander gesteckt sind.

2. Hohlkörper nach Anspruch 1, dadurch gekennzeichnet, daß Unterprofil (1) und Oberprofil (2) identisch sind.

3. Hohlkörper nach Anspruch 1 oder 2, dadurch gekennzeichnet, daß der gegenseitige Abstand der beiden Mittelschenkel (5, 6) der Dicke der beiden Außenschenkel (3, 4) entspricht.

4. Hohlkörper nach Anspruch 1, 2 oder 3, dadurch gekennzeichnet, daß die einander zugewandten Flächen der beiden Außenschenkel (3, 4) und der beiden Mittelschenkel (5, 6) mit Hinterschneidungen (7, 8) in Form eines Sägezahns versehen sind.

5. Hohlkörper nach einem der Ansprüche 1 bis 4, dadurch gekennzeichnet, daß von den Mittelschenkeln (5, 6) Stützstege (10) zum Basissteg (11) geführt sind.

6. Hohlkörper nach einem der Ansprüche 1 bis 5,

Fig.1

Fig.2

Fig.3

Fig.4

Fig. 5